# EUROPEAN PATENT SPECIFICATION

(11) **EP 0 471 286 B1**
(45) Date of publication and mention of the grant of the patent: **05.04.1995**
(21) Application number: 91113295.9
(22) Date of filing: 08.08.1991
(51) Int. Cl.: B60T 8/00, B60T 13/66

(54) **Tractor trailer articulation angle sensor calibration system and method**
Knickwinkelsensor-Kalibrierungssystem und -verfahren für Zugfahrzeug-Hänger-Kombinationen
Procédé et système de calibrage pour capteur d'angle d'articulation entre tracteur et remorque

(30) Priority: 16.08.1990 US 568435
(43) Date of publication of application: 19.02.1992
(73) Proprietor: EATON CORPORATION, Cleveland Ohio 44114 (US)
(72) Inventor: Breen, Michael Thomas, Garden City, Michigan 48135 (US)
(74) Representative: Rüger, Rudolf, Dr.-Ing.

(56) References cited:
- EP-A- 0 293 561
- EP-A- 0 303 827
- DE-A- 3 327 240
- US-A- 3 398 991
- US-A- 3 894 773
- US-A- 3 993 362
- US-A- 4 223 767

## Description

### BACKGROUND OF THE INVENTION

### Field of the Invention

The present invention relates to a system/method for calibrating a sensor for sensing the articulation angle of an articulated vehicle system. More particularly, the present invention relates to a control system/method for a vehicular automation system, such as a system for controlling brakes of an articulated vehicle system, such as a tractor-semitrailer system, to prevent, arrest or to minimize and quickly recover from, the conditions known as brake induced trailer swing and/or jackknife, including calibrating the articulation angle sensor utilized in the automation system.

### Description of the Prior Art

Brake control systems for all types of vehicles, including heavy duty tractor-semitrailer trucks, to improve the stopping and vehicle stability thereof are, of course, well known in the prior art.

Brake systems of the anti-lock type, for all types of vehicles, are well known in the prior art. Briefly, these systems operate to maintain vehicle stability (i.e. acceptable transverse coefficient of friction of braked wheels) by maintaining the longitudinal slip of the braked wheels within predetermined limits. This usually requires modulating the braking forces on an individual wheel and/or individual axle basis to maintain at least some wheel rotation.

Examples of prior art anti-lock brake systems ("ABSs") may be seen by reference to U.S. Patent Nos. 3,767,270; 3,768,872; 3,854,556; 3,893,696; 3,929,383; 3,929,382; 3,966,267; 4,392,202 and 4,591,213.

Brakes systems which control braking to achieve a driver demand, sense driver demand in a "brake-by-wire" manner, sense coefficient of friction and modify brake forces accordingly, sense load on a wheel and modify braking effort accordingly, sense wheel slip and/or use electronic signals to achieve trailer brake response are also disclosed in the prior art as may be seen by reference to U.S. Patent Nos. 4,140,352; 4,327,414; 4,494,199; 4,512,515; 4,545,240; 4,591,213; 4,606,586; 254,616,881; 4,648,663 and 4,768,840.

Brake systems for heavy duty articulated vehicles such as tractor-semitrailer trucks are difficult to design and control as the loading and maintenance will vary in a truck. For example, the loading on the tractor of a tractor-trailer may comprise a tractor only, a tractor with an empty or lightly loaded trailer or a tractor with a heavily loaded trailer.

Further, tractor-semitrailers are, by their nature, capable of exhibiting certain unstable dynamic behaviours known as jackknife and trailer swing, each of which has its own characteristic cause, effect and appropriate sequence of corrective action. Jackknife is sometimes called "tractor brake caused jackknife" while trailer swing is sometimes called "trailer brake caused jackknife".

The dynamics of undesirable trailer articulation events, such as a jackknife event, are discussed in SAE Paper No. 710045.

Various systems to prevent or minimize undesirable tractor-trailer articulation have been proposed. These include mechanical devices such as chains or variable pivot resistance devices and also wheel speed sensors and anti-lock controls on the trailer per se. Examples of these prior art devices may be seen by reference to U.S. Patent Nos. 3,618,983; 3,810,521; 4,023,864, 4,405,145 and 4,620,717 or to 3,894,773.

DE-A-33 27 240 discloses a method for controlling the articulation stability of vehicles is disclosed. In accordance with this methode the tractor-trailer vehicle is provided with sensor for sensing the articulation angle between the tractor and the trailer and the steering angle. Then the articulation angles are determined which correspond to possible steering angles during stable driving conditions. During the use of the vehicle, the system periodically senses the articulation angle as well as the steering angle and determines whether after a predetemined distance the current articulation angle corresponds to the articulation angle related to the steering angle as sensed at the beginning of distance. A calibration of the sensors is not mentioned.

The prior art devices were not satisfactory as the mechanical devices were somewhat slow to react, hindered required articulation during normal operation, required specially equipped/configured trailers and/or did not allow for a recovery from the locked-in condition. The anti-lock (ABS) type systems were not totally satisfactory as most existing trailers do not have ABS equipment, tractors are often driven with a variety of trailers and thus even if a trailer is provided with ABS equipment, it may not be compatible with the tractor ABS, providing all existing and future trailers with ABS equipment is prohibitively expensive and, under certain conditions, undesirable tractor trailer articulation may occur in the absence of the wheel lock conditions sensed and reacted to by existing ABSs.

The prior art devices which did use tractor-trailer articulation angle as a control input were not totally satisfactory as a method or system for calibrating, and maintaining the calibration of, the input signals from the articulation angle sensing devices was not provided.

### SUMMARY OF THE INVENTION

In accordance with the present invention, many of the drawbacks of the prior art have been overcome or minimized by the provision of an articulation angle sensor input signal calibration method and system for an articulated vehicle control system such as a trailer anti-swing and/or anti-jackknife control system.

One type of anti-trailer swing and/or anti-jackknife system involves providing, preferably entirely on the tractor, preferably an ABS equipped tractor, an ABS type valve located on the tractor upstream from the glad hand connection, sensors for sensing and/or providing signals allowing the calculation of tractor/trailer articulation angle ("AA"), rate of change of articulation angle ("dAA/dt") and/or rate of change of rate of change of articulation angle ("d²AA/dt²) and a control device, preferably microprocessor based, including a timer, for receiving input signals, processing same in accordance with predetermined logic rules and issuing command output signals to control the trailer brake ABS type valve. The "ABS type valve" should have the functions of lowering pressure to release the trailer brakes, holding the pressure at a low value to maintain brakes released, then reapplying the brakes in a controlled manner to a desired reapply pressure.

For such systems, it is important that the articulation angle input signals be properly calibrated. This is accomplished by sensing if (i) vehicle speed is above a reference value, (ii) turning radius of curvature is zero and (iii) the first derivative of turning radius of curvature is zero, for a predetermined period of time. When the above conditions occur, the vehicle articulation angle is zero and the input signals received from the articulation angle sensor are calibrated accordingly. Preferably, the anti-trailer swing and/or anti-jackknife system, or other vehicle automation system, is not activated until after articulation angle sensor input signal calibration is complete.

Accordingly, it is an object of the present invention to provide a calibration method/system for an articulated vehicle automation system including an articulation angle sensor.

A further object of the present invention to provide a method/system for calibrating the articulation angle input signals to an improved brake control system/method for an articulated vehicle system, such as a tractor-semitrailer truck system, which is operative to detect the onset of and prevent, or to minimize and allow recovery from, a trailer swing condition and/or a jackknife condition.

These and other objects and advantages of the present invention will become apparent from a reading of the detailed disclosure of the preferred embodiments taken in connection with the drawings.

### BRIEF DESCRIPTION OF THE DRAWINGS

Figure 1 is a schematic illustration of a conventional heavy duty tractor-semitrailer truck articulated vehicle.

Figure 2 is a schematic illustration of a tractor mounted brake control system including an anti-lock brake system, and also incorporating the control system of the present invention.

Figure 3 is a schematic illustration of a standard trailer brake system which may be utilized with the trailer anti-swing brake control system of the present invention.

Figure 4 is an enlarged, fragmentary, schematic illustration of the king pin/fifth wheel pivotal connection between a tractor and a semitrailer illustrating the angular relationship defined by the articulation angle.

Figure 5 is a graph illustrating the trailer brake applied pressure versus time curve(s) for the trailer anti-swing control system/method of the present invention.

Figure 6 is an illustration of a floating rotor potentiometer type of articulation angle sensor for the control system/method of the present invention.

Figure 6A is a partial sectional view of the sensor of Figure 6.

Figure 7 is an illustration of an ultrasonic distance sensor type articulation angle sensor for the control system/method of the present invention.

Figure 8 is a schematic illustration of a magnetic field direction sensor type of articulation angle sensor for the control system/method of the present invention.

Figure 8A is a partial sectional view of the sensor of Figure 8.

Figure 8B is a symbolic representation of a flux gate magnetometer used as a rotational position sensor.

Figure 9 is a schematic illustration, in the form of a flow chart, of the articulation angle sensor calibration system/method of the present invention.

### DESCRIPTION OF THE PREFERRED EMBODIMENT

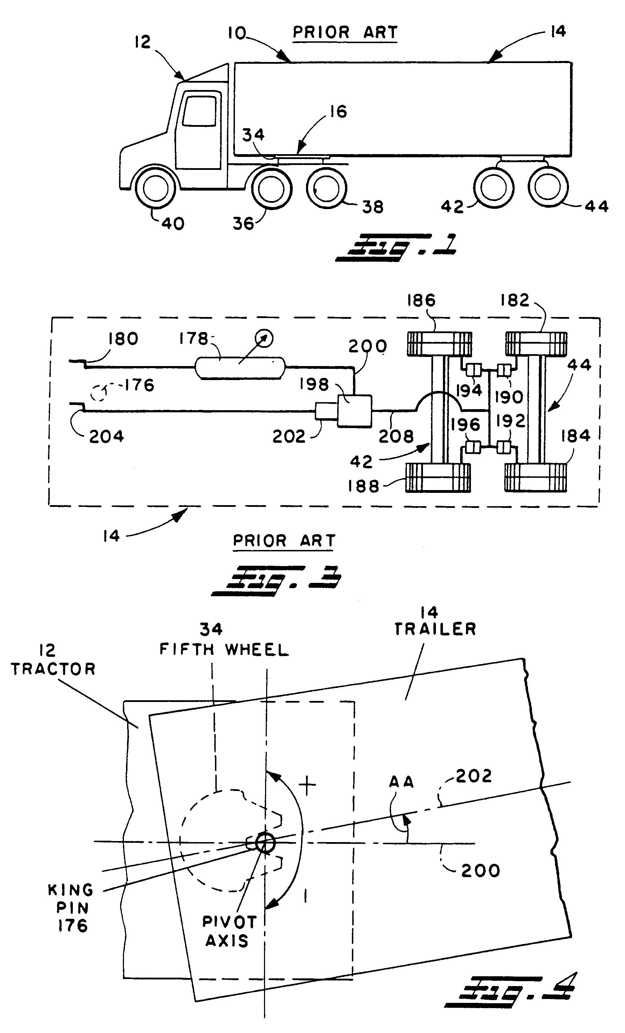

A trailer anti-swing and anti-jackknife control system/method of the type advantageously utilizing the articulation angle sensor calibration method/system of the present invention, as used on articulated multiple vehicle systems such as the tractor-semitrailer vehicle system 10, is illustrated in Figure 1. Briefly, as is well known to the prior art, the tractor-semitrailer system 10 comprises a tractor 12 and a semitrailer 14 attached thereto by a connecting means 16 which comprises the well known "fifth wheel" connector 34 fixed to the tractor for selective engagement with a "king pin" fixed to the trailer. The tractor typically comprises a pair or tandem set of rear drive axles 36 and 38 and a front steer axle 40. The trailer 14 typically comprises a tandem pair of non-steerable, non-driven trailer axles 42 and 44. Typically, but not necessarily, the front axle 40 will have non-driven steerable wheels. The tractor and/or the trailer may be equipped with single axles or three or more axles.

The ability to utilize fifth wheel/king pin connections to relatively quickly and easily couple or connect standardly equipped tractors to standardly equipped semitrailers in an articulated or pivoted manner provides the well appreciated advantages of commercial and operational flexibility as well as increasing the maneuverability of the vehicles. However, under certain conditions, often associated with braking while negotiating a curve or a turn, one or both of the tractor-semitrailer subvehicles may lose transverse stability resulting in a condition of uncontrolled excessive articulation, i.e. jackknife or trailer swing. Tractor-semitrailer uncontrolled excessive articulation is generally considered to consist of two distinct types of events, namely "jackknife" and "trailer swing", both of which may lead to catastrophic results.

Jackknifing, which is considered to be the most severe and least correctable type of uncontrolled excessive trailer articulation event, usually results from the tractor subvehicle, usually the tractor subvehicle drivewheels, losing transverse stability, often while cornering, which lack of stability is quickly compounded by the often relatively many times greater inertia imposed by the trailer. The other type of uncontrolled excessive trailer articulation event, trailer swing, is generally the result of the trailer wheels, 42 and 44, losing transverse stability, usually while cornering, resulting in the trailer swinging radially outwardly relative to the center of the curve being negotiated which may result in the trailer swinging into adjacent traffic lanes with the obvious potential for catastrophic results therefrom.

Jackknife events occur very quickly and must be sensed while still impending or at early initiation if corrective action, releasing the tractor brakes, is to be effective.

Trailer swing events often occur less rapidly than the jackknife events, and upon sensing conditions indicative of the advent of a trailer swing condition corrective action may be taken of the trailer brakes to minimize the extent of trailer swing and to cause the trailer to resume its tracking condition.

As is very well known, decreasing the slip of a tire will dramatically increase the transverse coefficient of friction thereof. Accordingly, trailer swing and jackknife induced by locked or almost locked trailer and tractor brakes, if sensed at the onset or initiation thereof, may be arrested or reduced by increasing the transverse stability of the trailer and tractor wheels by releasing the brakes thereof and allowing the wheels to roll up to or towards vehicle speed.

As stated above, the purpose of the present invention is to provide a method and system for calibrating articulated vehicle articulation angle (AA) input signals to vehicular automation systems, such as brake control systems designed to prevent or minimize trailer brake induced trailer swing events and/or jackknife events.

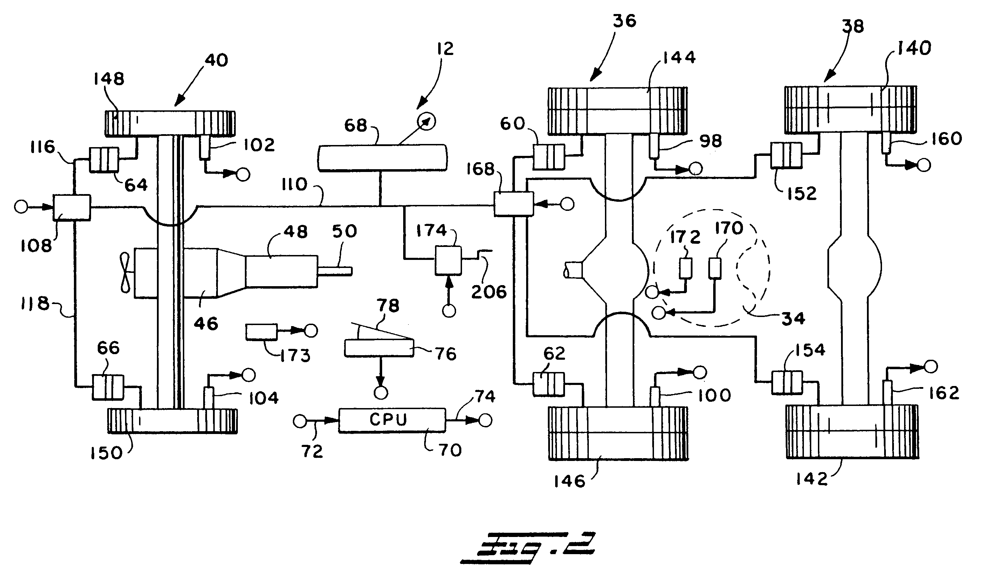

A braking system for the tractor 12 of an articulated tractor-semitrailer system 10 which utilizes a trailer anti-swing control system/method may be seen by reference to Figure 2. It is noted that while the braking system for tractor 12 illustrated in Figure 2 is of the "brake by wire" type, the present invention is equally applicable to other types of brake controls and ABS systems.

Briefly, as is well known in the prior art, tractor 12 includes a front steer axle 40, which is usually not driven, and a tandem pair of rear drive axles comprising front-rear drive axle 36 and rear-rear drive axle 38. Wheels 140 and 142 are associated with the rear-rear drive axle 38, wheels 144 and 146 are associated with the front-rear drive axle 36 and wheels 148 and 150 are associated with the front steer axle 40. The rear drive axles, 36 and 38, are driven by engine 46 through transmission 48 and driveline 50.

Air actuated brake chambers 60, 62, 152, and 154 are provided for retarding the rotation of wheels 144, 146, 140 and 142, respectively. The rear brakes 60, 62, 152 and 154 are, as is well known in the prior art, of the same size and type as likewise are the front brakes 64 and 66 which are provided for selectively braking the rotation of front steer drive axle wheels 148 and 150, respectively. In the system illustrated, the brakes are air actuated brakes of one of the well known types, such as the "S" cam actuated brake type or the air disc brake type, the details of which are well known in the prior art and may be seen in greater detail by reference to U.S. Patent Nos. 4,476,968 and 4,457,407, the disclosures of both of which are hereby incorporated by reference. While all of the front brakes and all of the rear brakes should be of the same size and type, it is not necessary, and is not preferable, that the front and rear brakes be of the same size. Compressed air for actuating the brakes is supplied from a plurality of supply tanks 68, only one of which is shown, which supply tanks are provided with compressed air from the vehicle onboard compressor (not shown) or the like.

The braking system includes a control unit 70, which for purpose of flexibility and responsiveness is preferably an electronic microprocessor based control unit having means 72 for receiving a plurality of input signals, means for processing input signals in accordance with predetermined logic rules, and means 74 for issuing command output signals to various system operators.

A sensor 76 senses the operator's displacement of a brake pedal 78 to provide an input signal indicative of the driver's demand or vehicle stopping effort. Sensors of this type are known in the prior art and may be seen by reference to above-mentioned U.S. Patent Nos. 4,140,352; 4,327,414 and 4,512,615. Typically, such transducers will sense the displacement of and/or force applied to the brake pedal 78 and will provide an output signal proportional thereto. As indicated above, the present invention is equally applicable to more conventional brake systems wherein the amount of braking effort is controlled by a well known treadle valve. To provide tractor ABS operation, wheel speed sensors 160, 162, 98, 100, 102, 104 are provided for providing input signals indicative of the rotational speed of wheels 140, 142, 144, 146, 148 and 150, respectively.

The central processing unit 70 will, as is well known in the ABS prior art, process the input signals in accordance with predetermined logic rules to generate command output signals to the front control valve 108 and the rear control valve 168. Briefly, control valve 108 is connected to the supply tank 68 through supply line 110, and, in accordance with the command output signals from CPU 70, independently pressurizes the conduits 116 and 118 leading to air brakes 64 and 66, respectively. Rear control valve 168 is also connected to supply tank 68 through supply line 110 and, in accordance with command output signals from CPU 70, individually provides pressurized fluid via branch conduits to the rear axle brakes 60, 62, 152 and 154. Accordingly, it may be seen that the braking efforts of each of the tractor wheels may be individually controlled for ABS purposes in a closed loop manner in response to command output signals generated by the CPU 70 in response to the input signals received and processed thereby, as is known ABS technology.

To provide the trailer anti-swing and/or anti-jackknife control system/method, the tractor braking system is also provided with one or more sensors 170 and 172, preferably mounted on the tractor such as at the fifth wheel 34, for providing input signals to CPU 70 indicative of and/or allowing the calculation of the current articulation angle (AA), and of time derivatives thereof such as the rate of change of articulation angle (dAA/dt) and the rate of change of the rate of change of articulation angle (d²AA/dt²). Of course, sensors may be provided for directly sensing one or more of the time derivatives of articulation angle. In addition, a control valve 174, controlled by command outputs from CPU 70, will provide pilot or controls to the standard trailer brake system control valves. Preferably, the control valve 174 is located on the tractor just upstream of one of the gladhand connectors 206. Valve 174 may be replaced by a standard treadle valve having an output proportional to the displacement of brake pedal 78 and an ABS type valve connected in series downstream therefrom.

Applicant's convention for the measurement of articulation angle, and the derivatives thereof with respect to time, and various sensing means for sensing same will be described in greater detail below.

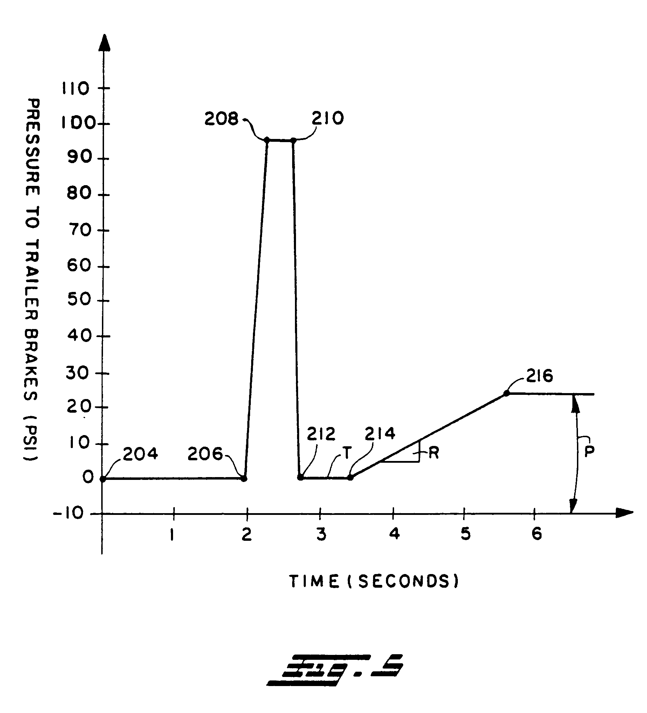

Referring now to Figure 3, a prior art standard trailer brake system (i.e, non-ABS) is illustrated. Briefly, the trailer includes a king pin 176 for selective engagement and disengagement to the tractor fifth wheel 34 as is well known in the prior art. The trailer includes a supply tank 178 connected to the tractor air system by means of a fluid connection 180. Trailer axles 42 and 44 support trailer wheels 182, 184, 186 and 188, each of which is provided with an air brake actuators or chambers 190, 192, 194 and 196, respectively. Typically, all of the trailer brakes are controlled at the same pressure by means of a relay valve 198 which has an inlet 200 connected to the trailer supply tank 178 and a pilot valve portion 202 for receiving a pilot air signal from the tractor air system by means of connector 204. Each of the trailer brakes is actuated at approximately the same pressure from a single output 208 from a pilot controlled relay valve 198.

Connector 204 is designed for connection with connector 206 on the tractor. Briefly, the connectors 204 and 206 and likewise connector 180 and its associated connection with a vehicle air system (not shown) form the fluid connection commonly known as the "gladhand".

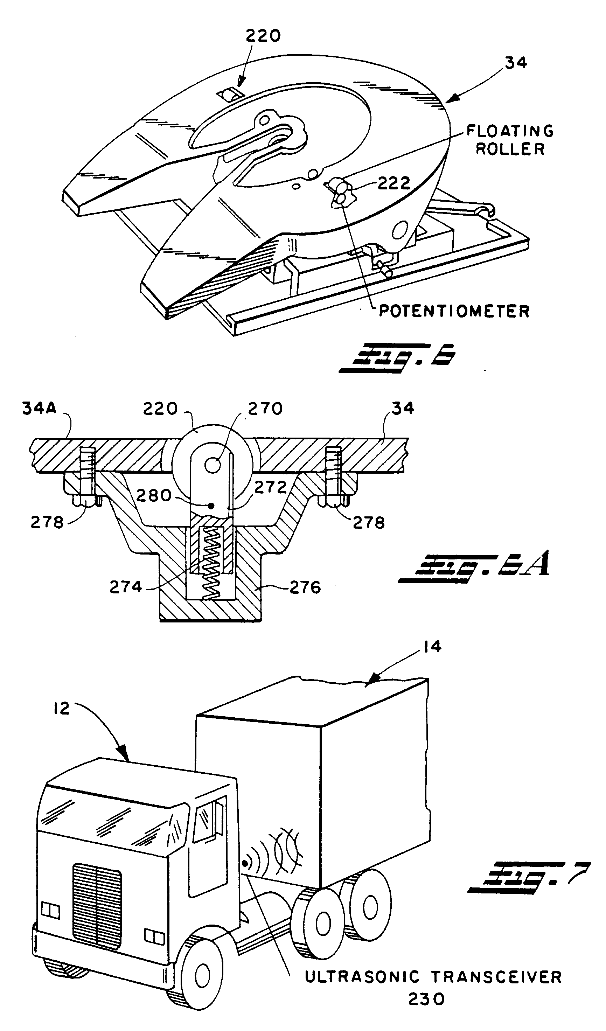

Applicant's convention, which will be used throughout this application, for the measure of the articulation angle (AA) may be best understood by reference to Figure 4 wherein the pivot axis between the tractor 12 and trailer 14 defined by the fifth wheel 34 and king pin 176 connection is viewed from the top of the vehicle, i.e. with the trailer extending rearwardly from left to right as shown in Figure 4. The articulation angle between the tractor and trailer, AA, is defined as the included angle between the longitudinal axis 200 of the tractor 12 passing through the king pin/fifth wheel pivot axis and the longitudinal axis 202 of the trailer 14 passing through the fifth wheel/king pin pivot axis. The articulation angle AA is measured from the tractor longitudinal axis 200 to the trailer longitudinal axis 202 and is assigned a positive value in the counterclockwise direction and a negative value in the clockwise direction. In the example shown in Figure 4, accordingly, the articulation angle AA would have a positive value under applicant's herein defined convention. When the vehicle is going perfectly straight, with the tractor longitudinal axis 200 parallel with the trailer longitudinal axis 202, the articulation angle (AA) of the vehicle is zero (0).

The trailer anti-swing control method and system of the present invention is operable to sense conditions indicative of incipient, or the onset of, a trailer brake induced trailer swing event by the sensing, memorizing and/or calculating, both current and at a time when the vehicle brakes are applied, at least one or more of the articulated vehicles' articulation angle, and a time derivative of articulation angle such as the first derivative of articulation angle with respect to time and/or the second derivative of articulation angle with respect to time. It is important to sense trailer swing at the initiation or onset, i.e. prior to the trailer swinging towards an almost zero articulation angle position, to have sufficient time to arrest and/or minimize the condition. It is also important to distinguish trailer swing from jackknife as different corrective responses are required.

Briefly, by way of example, one method of sensing an incipient trailer swing event is the sensing of conditions, when the brake pedal is applied, wherein the articulation angle (AA) and a time derivative thereof such as the first derivative of the articulation angle with respect to time (dAA/dt) are of opposite signs (which is an indication that the trailer 14 is swinging outwardly from the center of a curve which the tractor-semitrailer vehicle is traversing) and the absolute value of the second derivative of the articulation angle with respect to time (d²AA/dt²) exceeds the absolute value of a predetermined reference indicating that the trailer is swinging rapidly radially outwardly from the center of the curve being traversed by the articulated vehicle.

Upon sensing these conditions, the control logic will declare the existence of conditions indicative of an incipient trailer swing event and will release the trailer brakes for a given period of time (T) selected to allow the trailer wheels to roll back up towards vehicle speed to increase the transverse stability thereof and preferably minimize or eliminate the trailer swing and allow the trailer wheels to again track on the curve. After the predetermined period of time, trailer brakes will be reapplied at a rate (R) which may be fixed or may vary with measured system variables to a reapplication pressure (P) which is preferably a function of the value of articulation angle and/or the first and/or second derivative of articulation angle with respect to time at the onset of the trailer swing event. The brakes will be maintained at this pressure peak until such time as the braking event is terminated, i.e., the operator removes his foot from the brake pedal, at which point trailer brakes will again be controlled by the treadle valve until such time as incipient trailer swing is again sensed.

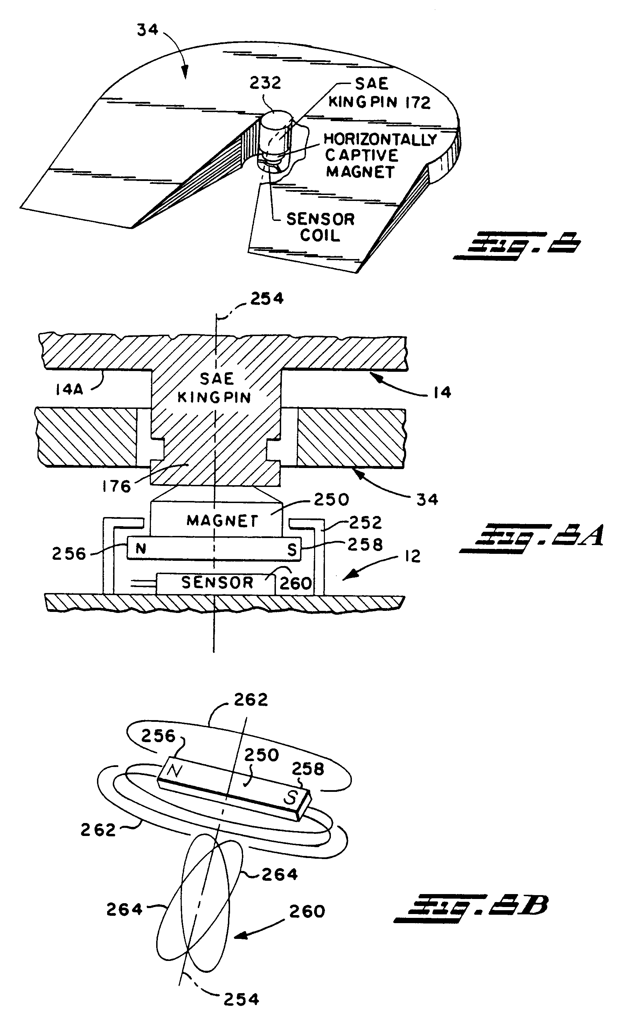

The application of pressure to the trailer brakes is controlled by trailer anti-swing control valve 174, an ABS type valve, which varies the pressure applied to the pilot portion 202 of the trailer relay valve 198. A graphic illustration of the pressure applied to the trailer brakes to minimize and recover from a sensed incipient trailer swing event may be seen by reference to Figure 5.

Referring to Figure 5, at point 204 to point 206 the vehicle brakes are not applied. At point 206, the vehicle operator has fully depressed the treadle valve or brake pedal 78 causing the relay valve 198 in the trailer, under the control of trailer brake control valve 174, to apply the trailer brakes with a high pressure as seen in point 208. If the operator continues to request a relatively high braking effort, trailer brakes will remain applied at a relatively high level from point 208 to point 210. For purposes of this example, at point 210 it will be assumed that the input signals processed by the CPU controller 70 indicate the existence of an incipient trailer swing event. The CPU 70 will then issue command output signals to the trailer brake control valve 174 causing the trailer brakes to be released as may be seen at point 212. The trailer brakes will be maintained in the released position for a period of time T which is selected as a time sufficient to allow the trailer wheels to roll back up to near vehicle speed. Time T may be predetermined or may vary with the value of sensed inputs to the CPU. Typically, as the trailer wheels are not provided with speed sensors, this is an empirically predetermined value. Applicant has discovered that a period of time from 0.25 to 1.25, preferably from 0.50 to 0.75, seconds is sufficient to allow the trailer wheels to roll back up to approximately vehicle speed and allow the trailer brakes to be reapplied to minimize the stopping distance of the total vehicle 10.

Accordingly, at the end of the predetermined period of time T, i.e., at point 214, the trailer brakes are reapplied at a rate R until a pressure P is achieved at point 216, which pressure P is preferably a function of the sensed or calculated articulation angle and/or first and/or second derivative of the articulation angle at the onset of the trailer swing event. Vehicle brakes will then be maintained at pressure P until termination of the braking event. Applicants have discovered that a rate of reapply R equal to about 10 PSI per second is an effective rate to achieve the pressure P as rapidly as possible without resulting in a repeat trailer wheel transverse loss of stability.

Reapply pressure P and/or the rate (R) of reapply pressure are, as stated above, a function of the dynamics of the trailer swing event as sensed by the values of articulation angle, the first derivative and second derivative of articulation angle during the trailer swing event.

Briefly, the absolute values of the first and second time derivatives of articulation angle during a trailer swing event are indicative of the loading on the trailer and/or the friction coefficient of the road. The more rapid the change in articulation angle and the rate of change of the change of articulation angle, the more lightly loaded is the trailer or the lower the coefficient of friction of the road. Accordingly, for a relatively high first, second and/or higher derivative of articulation angle with respect to time, a relatively lower reapply pressure and rate of reapplying pressure is desirable while with a relatively lower first and/or second derivative of articulation angle with respect to time, a relatively higher reapply pressure may be applied to the trailer brakes without fear of causing trailer wheels to again lose transverse stability.

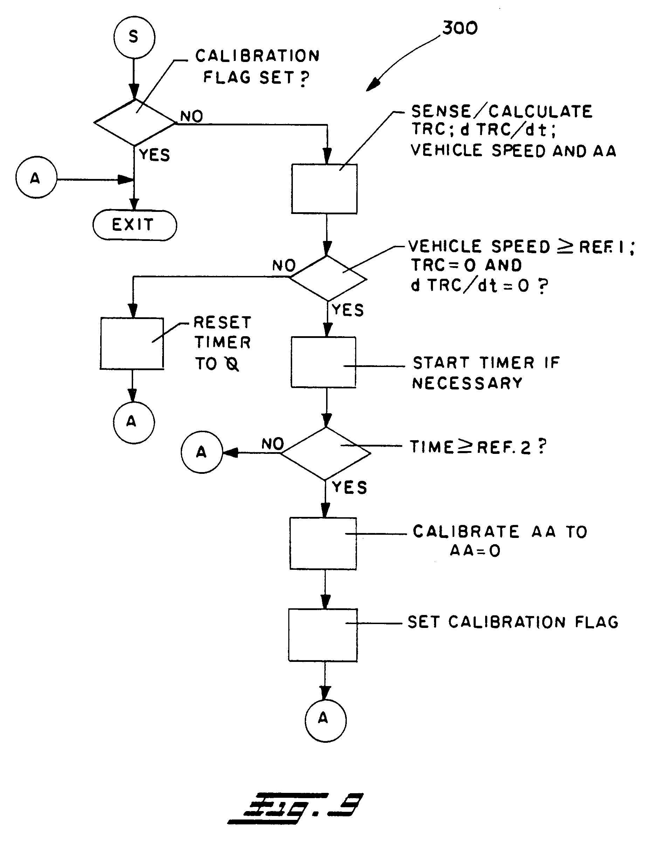

Various sensing devices for sensing the articulated vehicle articulation angle, first derivative of articulation angle with respect to time, and/or the second derivative of articulation angle with respect to time may be seen by reference to Figures 7-8. Preferably, the various sensing devices include components, all of which, or at least the active ones of which, are mounted on the tractor 12 of the tractor trailer vehicle 10.

Referring to Figure 6, a fifth wheel assembly 34 is modified by the provision of two rollers, preferably spring loaded floating rollers 220 and 222 which are associated with potentiometers or the like and which will be caused to rotate by pivotal movement of the tractor relative to the trailer to provide input signals indicative of articulation angle and/or the first or second derivatives thereof with respect to time.

Preferably, a pair of rollers 220 and 222 are utilized so that non-rotational movement of the king pin 176 in the fifth wheel 34 can be isolated and disregarded by the common mode method. Preferably, the axes of rotation 270 of the rollers 220 and 222 are coaxial and pass through the king pin fifth wheel pivot axis.

As may be seen by reference to Figure 6, the rollers are preferably rubber coated to provide a resilient adhesion to the undersurface of the trailer carrying the king pin and are carried on struts 272 which are spring 274 biassed upwardly in frame 276 to extend the rollers above the upper surface 34A of the fifth wheel for contact with an undersurface 14A of the trailer adjacent the king pin. Frame 276 is attached to the fifth wheel 34 as by bolts 278. Connectors 280 on strut 272 will provide an output for signals from potentiometers 223 which are indicative or proportional to rotation of the rollers.

Referring to Figure 7, an ultrasonic transceiver 230 is mounted to the tractor 12 and will send and receive ultrasonic signals which bounce off predetermined surfaces on the trailer 14 to provide an indication of the articulated vehicle articulation angle and/or derivatives thereof.

Figure 8 illustrates a fifth wheel 34 including a magnet carrying cap 232 which will attach to the trailer king pin and which will carry magnetic means for providing a magnetic sensor for sensing articulation angle and/or one of the derivatives thereof.

As may be seen in greater detail by reference to Figures 8A and 8B, a magnet 250 is mounted by a housing 252 to the tractor bed 12 for limited horizontal movement and rotational movement about the pivot axis 254. The magnet 250 defines a north 256 and a south pole 258 and is adapted to magnetically attach to a standard SAE king pin 176 for rotation therewith where the king pin is received in the fifth wheel 34.

The sensor 260 is preferably of the flux gate magnetometer type which allows sensing of relative rotary positions without contact and/or load bearing parts and is relatively tolerant of axial misalignment.

So long as the magnet 250 attached to the monitored part (king pin 176) produces lines of flux 262 which are substantially normal to the axis of rotation 254, and are parallel at the point of intersection with the coils 264 of the flux gate, an accurate position signal will be provided, even if the magnet and the coils are not coaxial.

Other types and/or configurations of sensors to provide articulation angle (AA) input signals to the CPU 70 are, of course, possible.

For proper operation of a brake control system utilizing sensed vehicle articulation angle (AA) as a control input signal, it is important that the system controller 70 have a system/method for calibration of the signals from the articulation angle sensing devices 170, 172. Preferably, the articulation angle input signals are calibrated prior to the brake control system being activated and may be periodically recalibrated to maintain the accuracy of the input signals.

A schematic illustration in flow chart format, of the calibration system/method of the present invention 300 may be seen by reference to Figure 9.

Upon start up of the vehicle, if the articulation angle input signals have not been calibrated allowing the vehicular automation system to be activated (i.e. if the calibration flag has not been set), vehicle speed, vehicle turning radius of curvature (TRC), the rate of change of vehicle turning radius of curvature (dTRC/dt) and articulation angle (AA) are sensed and/or calculated.

The method of determining the vehicle radius of curvature could be achieved by interrogating the output of a steer angle sensor (173) incorporated in the steering system of the vehicle or by calculating radius of curvature based upon differential wheel speeds as determined by tractor axle, preferably steer axle (40), wheel speed sensors (102, 104) incorporated in the tractor ABS system.

If the vehicle speed is above a predetermined reference value (REF₁), preferably about 6.2 km/h (ten miles per hour, 10 MPH), and the vehicle is not turning, i.e. vehicle turning radius of curvature, TRC, and the first time derivative thereof, dTRC/dt, both equal zero, for a given period of time (REF₂), preferably about one (1) second, then it is known that the articulated vehicle is in a position wherein the longitudinal axes of the tractor and trailer, 200 and 202, are parallel and AA equals zero.

The use of the first derivative of turning radius of curvature (dTRC/dt) is a preferred redundancy to assure that the calculations are accurate and that a rapid turn is not being initiated at the end of the data acquisition period.

Upon occurrence of the articulation angle calibration conditions, the current sensed signals from the articulation angle sensors, 170, 172, are calibrated to articulation angle equals zero and the calibration flag is set allowing the automation system to be activated if all other system activation preconditions, if any, are satisfied.

As an alternative, a similar articulation angle calibration may occur when vehicle speed exceeds a reference and right and left tractor wheel speeds are equal within a predetermined tolerance level.

As may be seen, applicant has provided an improved method/system for calibration of an articulation angle sensor for use in connection with a vehicular automation system, such as a brake control system/method for controlling the trailer and tractor brake application forces to prevent, arrest or minimize and provide rapid recovery from trailer swing and jackknife events.

The present invention has been described with a certain degree of particularity, it is understood that the detailed description of the preferred embodiments is by way of example only.

## Claims

1. An articulation angle signal calibration method for automated control systems for articulated vehicles (10) of the type comprising a tractor (12) and a trailer (14) connected at an articulating connection (34/176) defining a pivot axis (176) about which the trailer is pivotable relative to the tractor, an articulation angle (AA) of said vehicle defined by the included angle defined by a longitudinally extending axis of the trailer passing through said pivot axis (176) relative to a longitudinally extending axis of the tractor passing through said pivot axis (176) relative to a longitudinally extending axis of the tractor passing through said pivot axis (200), said control system including a control unit (70) for receiving input signals including at least (i) signals from an articulation angle sensor (170, 172) indicative of the vehicle articulation angle (AA), (ii) signals indicative of vehicle speed and (iii) signals indicative of vehicle turning radius of curvature (TRC) and for processing said input signals in accordance with predetermined logic rules to generate command output signals to a system actuator (174), said calibration method comprising:
determining current vehicle speed, current vehicle turning radius of curvature and the value of current input signals indicative of articulation angle; and
if, for a predetermined period of time (REF₂), (i) vehicle speed exceeds a predetermined first reference value (REF₁) and (ii) vehicle turning radius of curvature equals substantially zero, then calibrating the current input signals indicative of articulation angle to correspond to a zero degree (O.O') articulation angle.

2. The method of claim 1 wherein a time derivative of vehicle turning radius of curvature (dTRC/dt) is determined and said derivative equalling substantially zero for said predetermined period of time is an additional precondition to calibrating the input signals indicative of articulation angle.

3. The method of claims 1 or 2 wherein said tractor is equipped with wheel speed sensors (98, 100, 102 and 104), said signals indicative of vehicle turning radius of curvature comprising signals from said wheel speed sensors.

4. The method of claims 1 or 2 wherein said tractor includes a front steer axle (40), said front steer axle is equipped with wheel speed sensors (102, 104) and said signals indicative of vehicle turning radius of curvature comprises signals from said front steer axle wheel speed sensors.

5. The method of claim 3 or 4 wherein said signals indicative of vehicle speed comprise signals from said wheel speed sensors.

6. The method of claims 1 or 2 wherein said predetermined first reference (REF1) is about 6.2 km/h (ten miles per hour, 10 MPH).

7. The method of claims 1, 2 or 5 wherein said control unit (70) and said articulation angle sensor (170,172) are located on said tractor.

8. The method of claim 3 or 4 wherein said control unit (70) and said articulation angle sensor (170,172) are located on said tractor.

9. The method of claims 1 or 2 wherein said control system is deactivated upon predetermined conditions and calibration of said signals indicative of articulation angle is a precondition to reactivation of said control system.

10. An articulation angle signal calibration system for automated control systems for articulated vehicles (10) of the type comprising a tractor (12) and a trailer (14) connected at an articulating connection (34/176) defining a pivot axis (176) about which the trailer is pivotable relative to the tractor, an articulation angle (AA) of said vehicle defined by the included angle defined by a longitudinally extending axis of the trailer passing through said pivot axis (176) relative to a longitudinally extending axis of the tractor passing through said pivot axis (176) relative to a longitudinally extending axis of the tractor passing through said pivot axis (200), said control system including a control unit (70) for receiving input signals including at least (i) signals from an articulation angle sensor (170, 172) indicative of the vehicle articulation angle (AA), (ii) signals indicative of vehicle speed and (iii) signals indicative of vehicle turning radius of curvature (TRC) and for processing said input signals in accordance with predetermined logic rules to generate command output signals to a system actuator (174), said calibration system comprising:
means for determining current vehicle speed, current vehicle turning radius of curvature and the value of current input signals indicative of articulation angle; and
means effective, if, for a predetermined period of time (REF₂), (i) vehicle speed exceeds a predetermined first reference value (REF₁) and (ii) vehicle turning radius of curvature equals substantially zero, for calibrating the current input signals indicative of articulation angle to correspond to a zero degree (O.O°) articulation angle.

11. The system of claim 10 further including means for time determining a derivative of vehicle turning radius of curvature (dTRC/dt) and said derivative equalling substantially zero for said predetermined period of time is an additional precondition to calibrating the input signals indicative of articulation angle.

12. The system of claims 10 or 11 wherein said tractor is equipped with wheel speed sensors (98, 100, 102 and 104), said signals indicative of vehicle turning radius of curvature comprising signals from said wheel speed sensors.

13. The system of claims 10 or 11 wherein said tractor includes a front steer axle (40), said front steer axle is equipped with wheel speed sensors (102, 104) and said signals indicative of vehicle turning radius of curvature comprises signals from said front steer axle wheel speed sensors.

14. The system or claim 12 wherein said signals indicative of vehicle speed comprise signals from said wheel speed sensors.

15. The method of claims 10 wherein said predetermined first reference (REF₁) is about 6.2 km/h (ten miles per hour, 10 MPH).

## Patentansprüche

1. Verfahren zum Kalibrieren eines Gelenkwinkelsignals für automatisierte Steuersysteme für gelenkige Züge, die eine Zugmaschine (12) und einen Anhänger (14) aufweisen, der an einer Gelenkverbindung (34/176) angekuppelt ist, die eine Schwenkachse (176) definiert, um die der Anhänger gegenüber der Zugmaschine schwenkbar ist, wobei ein Beugewinkel (AA) des Zugs als jener Winkel definiert ist, der von einer durch die Schwenkachse (176) verlaufenden Längsachse des Anhängers und einer durch die Schwenkachse (176) verlaufenden Längsachse der Zugmaschine eingeschlossen ist, wobei das Steuersystem eine Steuereinheit (70) zum Entgegennehmen von Eingangssignalen enthält, zu denen wenigstens (i) den Zugbeugewinkel (AA) kennzeichnende Signale von einem Beugungswinkelsensor (170, 172), (11) die Fahrzeuggeschwindigkeit kennzeichnende Signale und (iii) Signale gehören, die für den Radius der Kurvenfahrt des Zugs (TRC) kennzeichnend sind, und zum Verarbeiten der Eingangssignale entsprechend vorbestimmter logischer Regeln zur Erzeugung von Ausgangssteuersignalen für einen Systemaktuator (174), mit den Verfahrensschritten:
es wird die aktuelle Fahrzeuggeschwindigkeit, der aktuelle Radius der Kurvenfahrt des Zugs und der Wert des aktuellen Eingangssignals, das für den Beugewinkel kennzeichnend ist, bestimmt; und
es wird sodann das aktuelle Eingangssignal, das für den Beugewinkel kennzeichnend ist, kalibriert, indem es einem null Grad (O,O°) Beugewinkel gleichgesetzt wird, wenn während einer vorbestimmten Zeitspanne (REF₂) (i) die Fahrzeuggeschwindigkeit einen vorbetimmten ersten Bezugswert (REF₁) übersteigt und (ii) im wesentlichen kein Radius der Kurvenfahrt des Zugs erkennbar ist.

2. Verfahren nach Anspruch 1, bei dem eine zeitliche Ableitung des Radius bei Kurvenfahrt (dTRC/dt) bestimmt wird und bei dem das Ereignis, daß die zeitliche Ableitung während der vorbestimmten Zeitspanne im wesentlichen gleich null ist, eine zusätzliche Voraussetzung zum Kalibrieren der Eingangssignale darstellt, die für den Beugewinkel kennzeichnend sind.

3. Verfahren nach Anspruch 1 oder 2, bei dem die Zugmaschine mit Raddrehzahlsensoren (98, 100, 102 und 1O4) versehen ist, wobei die Signale, die für den Radius der Kurvenfahrt kennzeichnend sind, die von den Raddrehzahlsensoren kommenden Signale umfassen.

4. Verfahren nach Anspruch 1 oder 2, bei dem die Zugmaschine eine vordere Lenkachse (40) aufweist, wobei die vordere Lenkachse mit Raddrehzahlsensoren (102, 104) ausgerüstet ist, und bei dem die Signale, die für den Radius bei Kurvenfahrt des Zugs kennzeichnend sind, die von den Raddrehzahlsensoren der Frontlängsachse kommenden Signale umfassen.

5. Verfahren nach Anspruch 2 oder 3, bei dem die Signale, die für die Fahrzeuggeschwindigkeit kennzeichnend sind, die Signale von den Raddrehzahlsensoren beinhalten.

6. Verfahren nach den Ansprüchen 1 oder 2, bei dem der vorbestimmte erste Bezugswert (REF₁) etwa 6,2 km/h (zehn Meilen pro Stunde, 10 MPH) ist.

7. Verfahren nach Anspruch 1, 2 oder 5, bei dem die Steuereinheit (70) und der Beugewinkelsensor (170, 172) auf der Zugmaschine angeordnet sind.

8. Verfahren nach Anspruch 3 oder 4, bei dem die Steuereinheit (70) und der Beugewinkelsensor (170, 172) auf der Zugmaschine angeordnet sind.

9. Verfahren nach Anspruch 1 oder 2, bei dem das Steuersystem unter vorbestimmten Bedingungen deaktiviert ist und die Kalibrierung des Signals, das für den Beugewinkel kennzeichnend ist, eine Vorbedingung für die Reaktivierung des Steuersystems darstellt.

10. System zum Kalibrieren eines Gelenkwinkelsignals für automatisierte Steuersysteme für gelenkige Züge, die eine Zugmaschine (12) und einen Anhänger (14) aufweisen, der an einer Gelenkverbindung (34/176) angekuppelt ist, die eine Schwenkachse (176) definiert, um die der Anhänger gegenüber der Zugmaschine schwenkbar ist, wobei ein Beugewinkel (AA) des Zugs als jener Winkel definiert ist, der von einer durch die Schwenkachse (176) verlaufenden Längsachse des Anhängers und einer durch die Schwenkachse (176) verlaufenden Längsachse der Zugmaschine eingeschlossen ist, wobei das Steuersystem eine Steuereinheit (70) zum Entgegennehmen von Eingangssignalen enthält, zu denen wenigstens (i) den Zugbeugewinkel (AA) kennzeichnende Signale von einem Beugungswinkelsensor (170, 172), (ii) die Fahrzeuggeschwindigkeit kennzeichnende Signale und (iii) Signale gehören, die für den Radius der Kurvenfahrt des Zugs (TRC) kennzeichnend sind, und zum Verarbeiten der Eingangssignale entsprechend vorbestimmter logischer Regeln zur Erzeugung von Ausgangssteuersignalen für einen Systemaktuator (174), wobei das System aufweist:
Mittel zum Erfassen der aktuelle Fahrzeuggeschwindigkeit, des aktuelle Radius der Kurvenfahrt des Zugs und der Wert des aktuellen Eingangssignals, das für den Beugewinkel kennzeichnend ist; und
Mittel, die bewirken, daß zum Kalibrieren das aktuelle Eingangssignal, das für den Beugewinkel kennzeichnend ist, einem null Grad (O,O°) Beugewinkel gleichgesetzt wird, wenn während einer vorbestimmten Zeitspanne (REF₂) (i) die Fahrzeuggeschwindigkeit einen vorbetimmten ersten Bezugswert (REF₁) übersteigt und (ii) im wesentlichen kein Radius der Kurvenfahrt des Zugs erkennbar ist.

11. System nach Anspruch 10, das ferner Mittel aufweist, um eine zeitliche Ableitung des Radius bei Kurvenfahrt (dTRC/dt) zu bestimmen, wobei das Ereignis, daß die zeitliche Ableitung während der vorbestimmten Zeitspanne im wesentlichen gleich null ist, eine zusätzliche Voraussetzung zum Kalibrieren der Eingangssignale darstellt, die für den Beugewinkel kennzeichnend sind.

12. System nach Anspruch 10 oder 11, bei dem die Zugmaschine mit Raddrehzahlsensoren (98, 100, 102 und 1O4) versehen ist, wobei die Signale, die für den Radius der Kurvenfahrt kennzeichnend sind, die von den Raddrehzahlsensoren kommenden Signale umfassen.

13. System nach Anspruch 10 oder 11, bei dem die Zugmaschine eine vordere Lenkachse (40) aufweist, wobei die vordere Lenkachse mit Raddrehzahlsensoren (102, 104) ausgerüstet ist, und bei dem die Signale, die für den Radius bei Kurvenfahrt des Zugs kennzeichnend sind, die von den Raddrehzahlsensoren der Frontlängsachse kommenden Signale umfassen.

14. System nach Anspruch 12, bei dem die Signale, die für die Fahrzeuggeschwindigkeit kennzeichnend sind, die Signale von den Raddrehzahlsensoren beinhalten.

15. System nach Anspruch 10, bei dem der vorbestimmte erste Bezugswert (REF₁) etwa 6,2 km/h (zehn Meilen pro Stunde, 10 MPH) ist.

## Revendications

1. Procédé d'étalonnage de signaux d'angle d'articulation pour des systèmes de commande automatisés pour ensembles de véhicules articulés (10) du type comprenant un véhicule tracteur (12) et une remorque (14) reliée à celui-ci par une liaison d'articulation (34/176) définissant un axe de pivotement (176) autour duquel la remorque peut pivoter par rapport au tracteur, un angle d'articulation (AA) dudit véhicule défini par l'angle inclus délimité d'une part par un axe (202) de la remorque, s'étendant longitudinalement et passant par ledit axe de pivotement (176) et d'autre part par un axe (200) du véhicule tracteur, s'étendant longitudinalement et passant par ledit axe de pivotement (176), ledit système de commande comprenant une unité de commande (70) pour recevoir des signaux d'entrée comprenant au moins (i) des signaux provenant d'un capteur d'angle d'articulation (170, 172) indiquant l'angle d'articulation de véhicule (AA), (ii) des signaux représentant la vitesse du véhicule (iii) des signaux représentant le rayon de courbure de braquage du véhicule (TRC) et pour traiter lesdits signaux d'entrée en concordance avec des règles logiques prédéterminées afin de produire à la sortie des signaux de commande appliqués à un dispositif d'actionnement de système (174), ledit procédé d'étalonnage comprenant les étapes consistant à :
- déterminer la vitesse présente du véhicule, le rayon présent de courbure de braquage du véhicule et la valeur des signaux d'entrée présents représentant l'angle d'articulation :
- si, pour une période de temps prédéterminée (REF₂), (i) la vitesse de véhicule dépasse une première valeur de référence prédéterminée (REF₁) et (ii) si le rayon de courbure de braquage est égal sensiblement à zéro, étalonner alors les signaux d'entrée présents représentant l'angle d'articulation en correspondance avec un angle d'articulation de zéro degré (0,0°).

2. Procédé selon la revendication 1, dans lequel une dérivée dans le temps du rayon de courbure de braquage de véhicule (dTRC/dt) est déterminée et le fait que ladite dérivée soit sensiblement égale à zéro pendant ladite période de temps prédéterminée constitue une précondition additionnelle pour un étalonnage des signaux d'entrée représentant l'angle d'articulation.

3. Procédé selon la revendication 1 ou 2, dans lequel ledit véhicule tracteur est équipé de capteurs de vitessses de roues (98, 100, 102 et 104), lesdits signaux représentant le rayon de courbure de braquage de véhicule compresnant des signaux provenant desdits capteurs de vitesses de roues.

4. Procédé selon la revendication 1 ou 2, dans lequel ledit véhicule tracteur comprend un essieu directeur avant (40), ledit essieu directeur avant est équipé de capteurs de vitesses de roues (102, 104) et lesdits signaux représentant le rayon de courbure de braquage de véhicule comprennent des signaux provenant desdits capteurs de vitesses de roues dudit essieu directeur avant.

5. Procédé selon la revendication 3 ou 4, dans lequel lesdits signaux représentant la vitesse de véhicule comprennent des signaux provenant desdits capteurs de vitesses de roues.

6. Procédé selon la revendication 1 ou 2, dans lequel ladite première référence prédéterminée (REF₁) a une valeur d'environ 6,2 km/h (dix miles par heure, 10 MPH).

7. Procédé selon la revendication 1, 2 ou 5, dans lequel ladite unité de commande (70) et lesdits capteurs d'angle d'articulation (170, 172) sont installés sur ledit véhicule tracteur.

8. Procédé selon la revendication 3 ou 4, dans lequel ladite unité de commande (70) et lesdits capteurs d'angle d'articulation (170, 172) sont installés sur ledit véhicule tracteur.

9. Procédé selon la revendication 1 ou 2, dans lequel ledit système de commande est désactivé dans des conditions prédéterminées et l'étalonnage desdits signaux représentant l'angle d'articulation constitue une précondition de réactivation dudit système de commande.

10. Système d'étalonnage de signaux d'angle d'articulation pour des systèmes de commande automatisés pour véhicules articulés (10) du type comprenant un véhicule tracteur (12) et une remorque (14) reliée à celui--ci par une liaison d'articulation (34/176) définissant un axe de pivotement (176) autour duquel la remorque peut pivoter par rapport au tracteur, un angle d'articulation (AA) dudit véhicule défini par l'angle inclus délimité d'une part par un axe (202) de la remorque, s'étendant longitudinalement et passant par ledit axe de pivotement (176) et d'autre part par un axe (200) du véhicule tracteur, s'étendant longitudinalement et passant par ledit axe de pivotement (176), ledit système de commande comprenant une unité de commande (70) pour recevoir des signaux d'entrée comprenant au moins (i) des signaux provenant d'un capteur d'angle d'articulation (170, 172) indiquant l'angle d'articulation de véhicule (AA), (ii) des signaux représentant la vitesse du véhicule (iii) des signaux représentant le rayon de courbure de braquage du véhicule (TRC) et pour traiter lesdits signaux d'entrée en concordance avec des règles logiques prédéterminées afin de produire à la sortie des signaux de commande appliqués à un dispositif d'actionnement de système (174), ledit système d'étalonnage comprenant :
- des moyens pour déterminer la vitesse présente de véhicule, le rayon présent de courbure de braquage de véhicule et la valeur des signaux présents d'entrée représentant l'angle de l'articulation ; et
- des moyens agissant si, pendant une période de temps prédéterminée (REF₂), (i) la vitesse de véhicule dépasse une première valeur de référence prédéterminée (REF₁) et (ii) si le rayon de courbure de braquage est égal sensiblement à zéro, pour étalonner les signaux d'entrée présents représentant l'angle d'articulation en correspondance avec un angle d'articulation de zéro degré (0,0°).

11. Système selon la revendication 10, comprenant en outre des moyens pour déterminer une dérivée dans le temps du rayon de courbure de braquage de véhicule (DTRC/dt) et dans lequel le fait que ladite dérivée soit égale sensiblement à zéro pendant ladite période de temps prédéterminée constitue une précondition additionnelle d'étalonnage des signaux d'entrée représentant l'angle d'articulation.

12. Système selon la revendication 10 ou 11, dans lequel ledit véhicule tracteur est équipé de capteurs de vitesses de roues (98, 100, 102 et 104), lesdits signaux représentant le rayon de courbure de braquage de véhicule comprenant des signaux provenant desdits capteurs de vitesses de roues.

13. Système selon la revendication 10 ou 11, dans lequel ledit véhicule tracteur comprend un essieu directeur avant (40), ledit essieu directeur avant est équipé de capteurs de vitesses de roues (102, 104) et lesdits signaux représentant le rayon de courbure de braquage de véhicule comprennent des signaux provenant desdits capteurs de vitesses de roues dudit essieu directeur avant.

14. Système selon la revendication 12, dans lequel lesdits signaux représentant la vitesse du véhicule comprennent des signaux provenant desdits capteurs de vitesses de roues.

15. Procédé selon la revendication 10, dans lequel ladite première référence prédéterminée (REF₁) a une valeur d'environ 6.2 km/h (dix miles par heure, 10 MPH).
